# EUROPEAN PATENT APPLICATION

(11) **EP 1 132 933 A2**
(43) Date of publication of application: **12.09.2001**
(21) Application number: 01660037.1
(22) Date of filing: 22.02.2001
(51) Int. Cl.: H01H 19/00

(54) **A method for entering a key code in an electronic device**

(30) Priority: 08.03.2000 FI 20000529
(71) Applicant: NOKIA MOBILE PHONES LTD., 02150 Espoo (FI)
(72) Inventor: Linden, Mikael, 33720 Tampere (FI); Uusilehto, Janne, 33100 Tampere (FI)
(74) Representative: Pursiainen, Timo Pekka

(57) **Abstract**

The invention relates to an electronic device (1) provided with means for manual entering of a key code. Said means comprise at least one selector (2) which is arranged to select said key code or an element of it. The invention also relates to a method for entering a key code in an electronic device (1) provided with means for manual entering of a key code. Said key code is selected by using at least one rotatable selector (2). The invention also relates to a wireless device and an auxiliary device (1) provided with means for manual entering of a key code. Said means comprise at least one selector (2) arranged for selecting said key code or an element of it.

## Description

The present invention relates to an electronic device as set forth in the preamble of the appended claim 1. The invention also relates to a method for entering a key code in an electronic device as set forth in the preamble of the appended claim 11. Furthermore, the invention relates to a wireless device and an auxiliary device as set forth in the reamble of the appended claim 19.

In wireless communication, various technologies are used, of which one of the most versatile and modern technology is the Bluetooth which is an open technology for data and audio transmission. It is based on short distance radio links which are implemented in small integrated circuits having *e*.*g*. a size of approximately 9 × 9 mm and containing a transceiver. The range of the devices is typically about ten metres, but by using a higher transmission level, it is possible to reach a range of even 100 m. The technology is intended for quick mobile communication between very different digital devices, wherein the maximum data transmission rate is approximately 1 Mb/s. These devices can be for example mobile phones, portable computers, various peripheral computer devices, PDA devices, cameras, and/or fax machines. Some of the devices can be portable devices and some can be stationary. Between these devices, the Bluetooth technology can set up a wireless data transmission link operating at a frequency of approximately 2.4 GHz. Furthermore, data security properties are implemented *e*.*g*. by 40-bit enciphering.

Devices using the above-mentioned technology can set up connections both point-to-point and point-to-multi-point. The technology can be used to implement a so-called piconet which can comprise 2 to 8 devices. The security of the communication protocol is based on a complex key formation algorithm and an exchange protocol. This protocol first creates an authentication key which is generated from a secret key entered by the user, such as a PIN code (Personal Identification Number); furthermore, an encryption key is generated. As a result of successful generation of keys and their exchange process, the communicating parties have checked each other's rights, after which a secure data transmission link has been set up between these parties. This process is called pairing. To make this pairing successful, the same secret key code must be entered in each device. Depending on the case in the above-mentioned technology, the length of the key code in bit form can be 1 to 16 bytes, *i.e.* 8 to 128 bits. Thus, the alternatives for a one-byte key are the digits from 0 to 255, the alternatives for a key of two bytes are 0 to 65,535, the alternatives for a key of three bytes are 0 to 16,777,215, *etc.*

The devices applying the Bluetooth technology are normally various auxiliary devices, such as a wireless portable hands-free set and a wireless smart card reader. It is common to the devices that they normally require a secure data transmission link and that they normally have very limited possibilities for user interaction. This is due to the fact that the devices are normally small and they have no display or keypad. For this reason, it is very difficult to enter a PIN code required by the protocol in these devices. On the other hand, if these devices were equipped with the means required for entering a PIN code, particularly a keypad and a display, which were used as a user interface, the device would be larger and more expensive. This is not desirable in devices of prior art which should be preferably inexpensive and small, because they are normally various portable devices and their auxiliary devices which should for example fit in a pocket.

Another way of entering a PIN code is that the PIN code is installed in the Bluetooth device already in connection with the manufacture. Thus the user will never have to enter the PIN code to use this Bluetooth device. Also any third party can use this Bluetooth device, because it is not protected with a separate PIN code. The PIN code can also be transmitted to the Bluetooth device by means of the Bluetooth protocol. Even this solution is not very good, because a security risk still exists.

It is an aim of the invention to present an electronic device, particularly a wireless device, and a method by which a secret key code, such as a PIN code, can be entered into a device in a secure manner and without increasing the dimensions and manufacturing costs of the device significantly. Another aim is that the entering of *e*.*g*. a PIN code into the device is as easy as possible for the user.

This aim can be achieved by providing the device with at least one, for example a substantially wheel-like or a substantially disc-like rotatable selecting means whereby *e.g.* a PIN code can be entered.

To put it more precisely, the electronic device according to the invention is characterized in what will be presented in the characterizing part of claim 1. The method according to the invention is characterized in what will be presented in the characterizing part of claim 11. The wireless device and the auxiliary device according to the invention are characterized in what will be presented in the characterizing part of claim 19.

The present invention provides significant advantages. The selecting means can be made compact without affecting its usability, wherein the need for space in the electronic device is correspondingly small. Furthermore, it is significantly more advantageous to implement one or more selecting means than in solutions of prior art. Thus, a secure and easy way to enter a secret key code can also be implemented in inexpensive, simple and/or compact, particularly mobile peripheral devices, in which no keypad is needed. Thus, any expensive and large keypad or possibly also a display is not needed in the device.

It should be noted that the Bluetooth technology and protocol are only used as an example of an application for which the method and electronic device according to the invention is suitable. The application can also be *e.g.* a WLAN (Wireless Local Area Network) or IrDA (Infrared Data Association) environment. Moreover, the PIN code is only used as an example. It is obvious that also other protective codes and key codes can be entered into the electronic device.

In the following, the invention will be described in more detail with reference to the appended drawings, in which
- Fig. 1: shows an electronic device according to an advantageous embodiment of the invention, having four selectors in an upright position,
- Fig. 2: shows another electronic device according to an advantageous embodiment of the invention, having one selector in a horizontal position,
- Fig. 3: shows a third electronic device according to an advantageous embodiment of the invention, having selectors both in a horizontal and in a vertical position,
- Fig. 4: shows an electronic device according to a preferred embodiment of the invention in a reduced block chart, and
- Fig. 5: shows a wireless device and an auxiliary device according to a preferred embodiment of the invention.

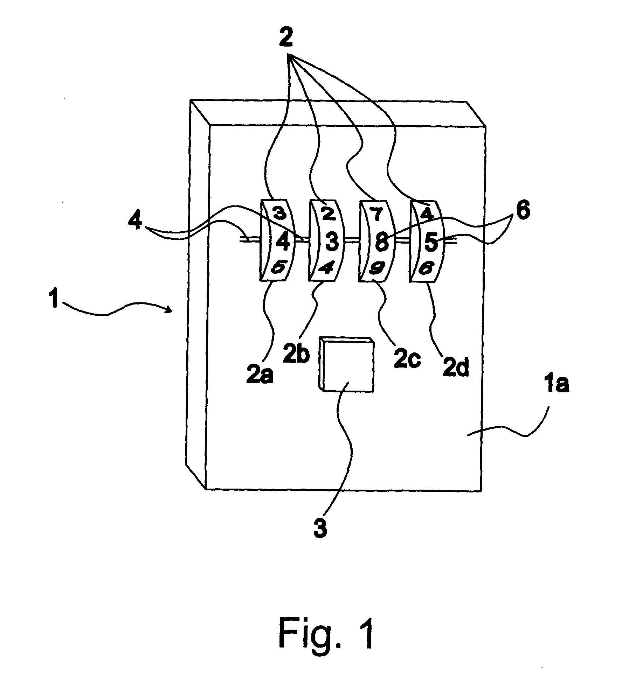

Figure 1 shows an electronic device 1 according to an advantageous embodiment of the invention. This device 1, in which it is desired to enter a PIN code (in the case of Fig. 1, a four-digit secret key code "4385") manually, comprises at least one selector 2. This selector is a rotatable, substantially roll-like, wheel-like or disc-like means which is rotated around its axis. The selector has a substantially circular shape, because this shape is the most advantageous in view of space utilization. Naturally, it is possible that the selector can also be *e.g.* slidable. A rotatable selector can be turned *e.g.* by means of a button which rotates the selector step by step. The selector 2 is rotated by turning its outer periphery with a finger. The selector is preferably set in the device in such a way that only a part of the selector is visible on a first surface 1a of the device, wherein the axis of rotation of the selector is substantially parallel to the first surface 1a. The selector is thus transverse to the first surface 1a. The selector has at least two predetermined positions, to which correspond symbols 6 arranged on the periphery of the selector or in its vicinity at substantially regular intervals in such a way that the user can see the selected symbol. There are preferably ten positions corresponding to the numbers 0 to 9. Furthermore, the device is equipped with a cursor 4 arranged close to the selector to indicate which symbol is selected at the time. This cursor can be e.g. a painted line or opening in the electronic device, showing the selected symbol. Alternatively, the symbols 6 can be arranged in the device 1 close to the periphery of each selector 2, and the cursor 4 on the periphery of the selector or in its vicinity. The different positions can be distinguished to the user so that a clear step is felt upon rotating at each predetermined position and the selector only remains in these predetermined positions. The selector can comprise the necessary frame structure and bearings installed in a location reserved in the device. Furthermore, the device has means for reading an entered symbol. These means comprise for example sensor means to examine the position of the selector, on the basis of which it is possible to determine the set symbol. According to an advantageous embodiment, the sensor means are also arranged to detect the rotation of the sensor as well as the direction of rotation and to transmit information on this to the control system of the device. The sensor means can comprise for example a position, angle or movement detector depending on the more specific implementation of the selector. The selection of the sensor means, the more specific implementation and the transmission of data in electrical format are obvious as such for anyone skilled in the art, wherein a more detailed description is rendered unnecessary.

The different symbols 6 in the selector 2 constitute a set of symbols, for example [0, 1, 2, 3, 4, 5, 6, 7, 8, 9] or [A, B, C, D], the PIN code being composed of at least one symbol. A longer PIN code can also comprise the same symbols. The set of symbols preferably comprises numbers and/or letters to make it as easy as possible for the user to distinguish between the different symbols. The symbols are arranged on the selector 2 preferably in a numerical and/or alphabetical order to make it as easy as possible for the user to find the correct symbol. Naturally, it is obvious that the symbols 6 can be any graphically displayable figures; the set of symbols can be *e.g.* [ 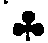 , ◆, 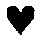 , 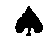 ].

In the simplest case, the PIN code is entered in such a way that there is one selector 2a, 2b, 2c, 2d for each symbol 6 of the PIN code to be entered, forming a kind of rotatable combination selector. Let us assume that the PIN code to be entered in this case is "4385" as shown in Fig. 1. In this case, the user turns the selector 2a corresponding to the first symbol ("4") of the PIN code, until the first symbol is substantially at the cursor 4. In a similar manner, the user turns the selector 2b, 2c and 2d corresponding to the second, third and fourth symbol ("3", "8" and "5") of the PIN code, respectively. The selectors can also be turned in a different order than that presented above, until the PIN code finally selected is "4385". According to a preferred embodiment of the invention, the PIN code can be entered into the electronic device 1 by pressing a button 3 after the PIN code has been selected. The button 3 is coupled to the sensor means and/or the control system which detects the pressing of the button, for example as an electrical signal.

In the above-presented solution, the PIN code is visible after the selection, wherein it is possible for third parties to see this PIN code. This problem can be avoided by turning one or more selectors 2 in a different position after entering the PIN code, wherein the PIN code is no longer visible. Furthermore, the entered PIN code can be in the memory of the electronic device 1, wherein this device can still be used. In the solution, the length of the PIN code is, however, restricted to the number of the different selectors 2a, 2b, 2c, 2d. For example in the case of Fig. 1, the length of the PIN code is four symbols.

According to an advantageous embodiment of the invention, the electronic device 1 has only one selector 2, by means of which the PIN code is entered in the electronic device, even though the PIN code consisted of several symbols 6. Thus, the user turns the selector 2 until the first symbol ("4") of the PIN code is substantially at the cursor 4. This symbol is entered into the device by pressing the button 3. The button can also be arranged in connection with the selector 2, wherein the selector is pressed a short distance in a direction perpendicular to the surface 1a and the axis. The selector is returned up for example by means of a spring. The sensor means detect pressing again, for example by means of an electrical switch. Next, the user turns the selector 2 until the second symbol ("3") of the PIN code is substantially at the cursor. Again, the symbol is entered into the electronic device by pressing the button 3. This procedure is repeated until the last one ("5") of the symbols of the PIN code has been entered into the electronic device. The advantage is that only the last symbol of the PIN code is left visible, wherein it is almost impossible for third parties to find out the correct PIN code. Another advantage is that the length of the PIN code is not limited, and also the space utilization is at a minimum. Also in this case, the security can be improved by turning the selector 2 to a different position after entering the last symbol of the PIN code, wherein even the last symbol of the PIN code is not visible.

In an advantageous embodiment of the invention, the symbol 6 is accepted by changing the direction of rotation of the selector at each symbol to be selected. For example, the PIN code ("4385") used as an example can be entered into the electronic device 1 in the following way, if it is assumed that the selector 2 is turned upwards and downwards. First, the selector 2 is turned downwards until the first symbol ("4") of the PIN code, forming part of the code, is substantially at the cursor 4. Next, the selector is rotated upwards to select the second symbol ("3") of the PIN code. Next, the selector is rotated downwards again to select the third symbol ("8") of the PIN code. The selector is still rotated upwards to select the last symbol ("5") of the PIN code. Each symbol 6 is always entered in the electronic device 1 when the direction of rotation of the selector 2 is changed. The last symbol can be accepted *e*.*g*. automatically when the rotation is stopped at the correct symbol, when the direction of rotation is changed once more, or by pressing the button 3. The button can also be arranged in connection with the selector 2, wherein the selector 2 is pressed in a direction perpendicular to the surface 1a. It is obvious that the entering of the PIN code can also be started by rotating upwards. The PIN code can be made more complicated also by rotating the selector a certain number of full revolutions after changing the direction of rotation until reaching the symbol to be selected. In this case, the PIN code can be for example two revolutions upwards to the symbol "4", one revolution downwards to the symbol "3", directly upwards to the symbol "8", and two revolutions downwards to the symbol "5". In this way the PIN code can be made sufficiently difficult with a small number of symbols, wherein the selector 2 can be made smaller. The PIN code can also be made more complicated by increasing the length of the PIN code.

According to an advantageous embodiment of the invention, the PIN code is entered into the device 1 by simple rotations, wherein successive revolutions in the same direction, separated by pauses, make up the required code. For example, four successive revolutions in a first direction, three successive revolutions in the other, opposite direction, eight successive revolutions in the first direction, and five successive revolutions in the other direction are required to enter the code "4385". Here it is also possible to use several separate selectors as shown in Fig. 1. Thus, it is not necessary to examine the position of the selector but only its rotation and possibly the direction of rotation, and even a longer code can be entered by means of a single selector. In all, the code consists of a sequence of movements and/or positions with a selector, selected with the selector in various ways.

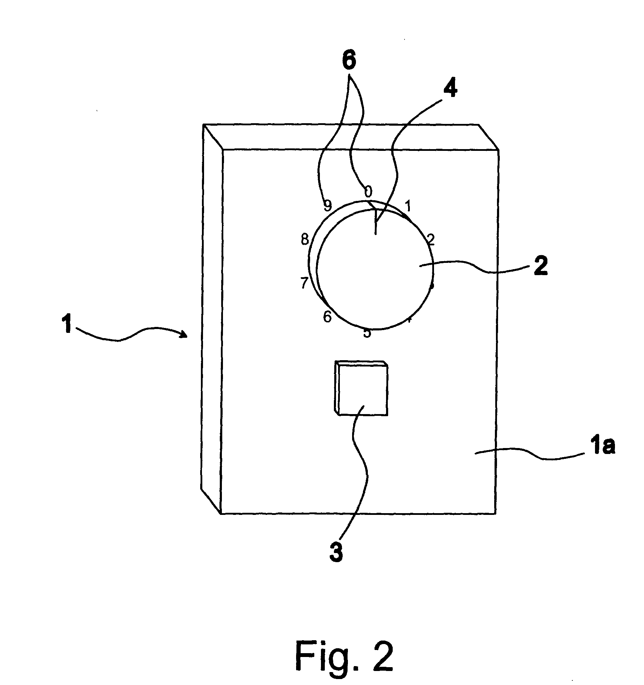

Figure 2 shows an electronic device according to a second advantageous embodiment of the invention, in which a PIN code should be entered. The electronic device comprises at least one rotatable selector 2 whose axis of rotation is substantially perpendicular to the first surface 1a a of the device 1. The selector can be placed on the surface 1a or at least partly embedded in the device 1. The selector can thus comprise a knob-like part which is gripped for rotating. The selector is in a horizontal position with respect to the first surface 1a. The selector has a substantially circular shape and it can resemble a wheel, a disc or a roll. The selector has at least two predetermined positions, to which correspond symbols 6 marked at substantially regular intervals on the circumference of the selector or in its vicinity so that the user can see the selected symbol. A cursor 4 is formed on the circumference of the selector or close to the circumference, to determine which symbol has been selected at a time. In this case, the electronic device 1 has preferably only one selector 2, because in this position the selector takes more space on the first surface 1a of the electronic device than when the selector is in an upright position (Fig. 1). The selection of the PIN code in the electronic device 1 can be performed in the same way as when the selector is in the upright position (Fig. 1), with the difference that the selector 2 is rotated clockwise or counterclockwise, and in the button function, the selector 2 is pressed in the direction of the axis of rotation.

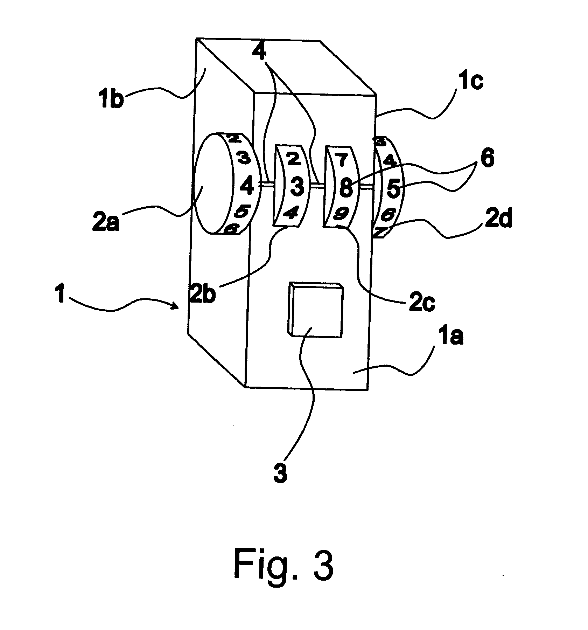

It is possible that the electronic device 1 is equipped with selectors 2 both in the vertical and in the horizontal position with respect to the surface to enter the key code, particularly in the case of small devices. In one advantageous electronic device 1 of Fig. 3, disc-like horizontal selectors 2a, 2d are placed on side surfaces 1b and 1c of the electronic device 1, and horizontal selectors 2b, 2c on the front surface 1a to form the PIN code. The axis of the first selector 2a is perpendicular to the second surface 1b. The axes of the second and third selectors 2b, 2c are parallel to the surface 1a. The axis of the last selector 2d is, in turn, perpendicular to the surface 1c.

It is possible that the selector or selectors are also used to enter another security code. For example, if the electronic device 1 coupled to a wireless device 11 *e*.*g*. in a wireless manner is a diskette drive or a smart card reader which uses diskettes or smart cards 12 protected with a security code, the selector 2 or selectors can also be used to enter the security code of this diskette or smart card.

To prevent third parties from using the electronic device 1 in which a PIN code has been entered, it must be possible to remove this PIN code. This can be implemented for example by removing the entered code from the device when the user rotates one or several selectors 2 or presses the button 3. To use the device, the PIN code must be entered again.

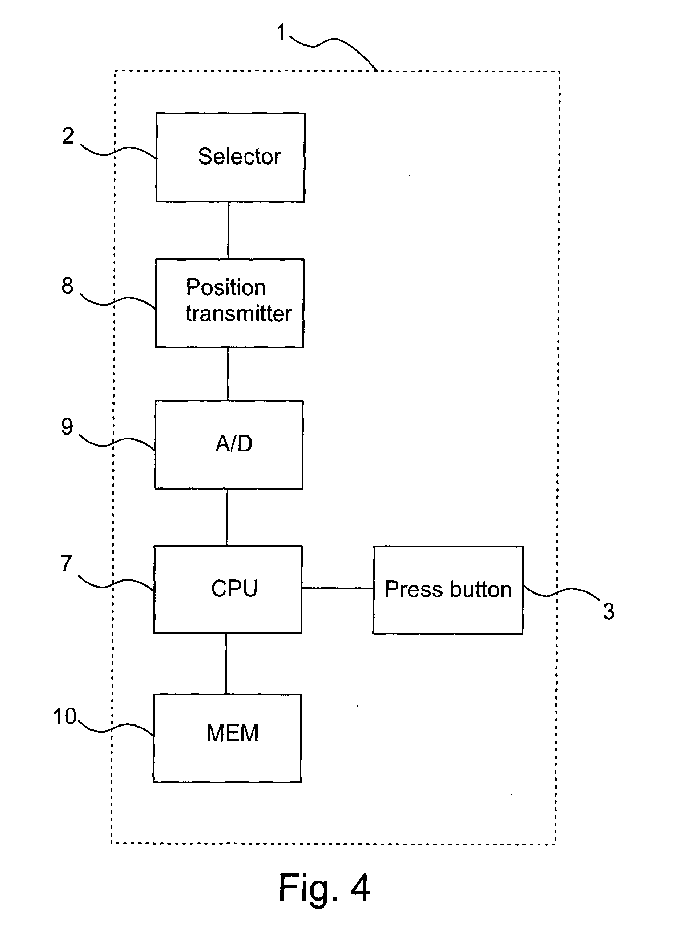

Figure 4 shows, in a reduced block chart, an electronic device 1 according to a preferred embodiment of the invention. This device 1 preferably comprises at least control means 7, such as a processor 7, a memory 10, sensor means 8, such as a position detector 8, at least one selector 2, an A/D converter 9, and a button 3 which can also be arranged in connection with the selector 2. In this case, the PIN code or selected symbol is accepted by pressing the button 3. When the user wishes to enter a code or one selected symbol 6, depending on the case, in the memory 10 of the electronic device 1, he/she first presses the button 3 or the selector 2. After this, the position detector 8 reads the position of the selector 2 which is converted by the A/D converter 9 into a digital format and stored in the memory 10. If there are more than one selectors, the position of each selector is separately read, converted into digital format, and stored in the memory 10. When each symbol 6 of the PIN code is in the memory 10, these symbols can be combined to one item of digital information, after which the processing of the PIN code can be started. In the case of several selectors, it is also possible that the position data of all the selectors are compiled into one item of digital information just before the processor.

If a selected single symbol 6 is entered on the basis of the movement of the selector 2, i.e. with a delay after the rotation of the selector or by changing the direction of rotation, a separate button 3 will not be needed. In this case, the movement of the selector is monitored *e.g.* at small intervals by means of the position detector 8, wherein the position detector detects a stoppage of the selector or a change in the direction of rotation. As a result, the selected symbol is read into the memory 10 of the electronic device 1 according to the previous case. In case also the number of revolutions is monitored, the position detector 8 controls the movement of the selector at intervals. Thus, the processor 7 can count the number of revolutions on the basis of the position data obtained from the position detector.

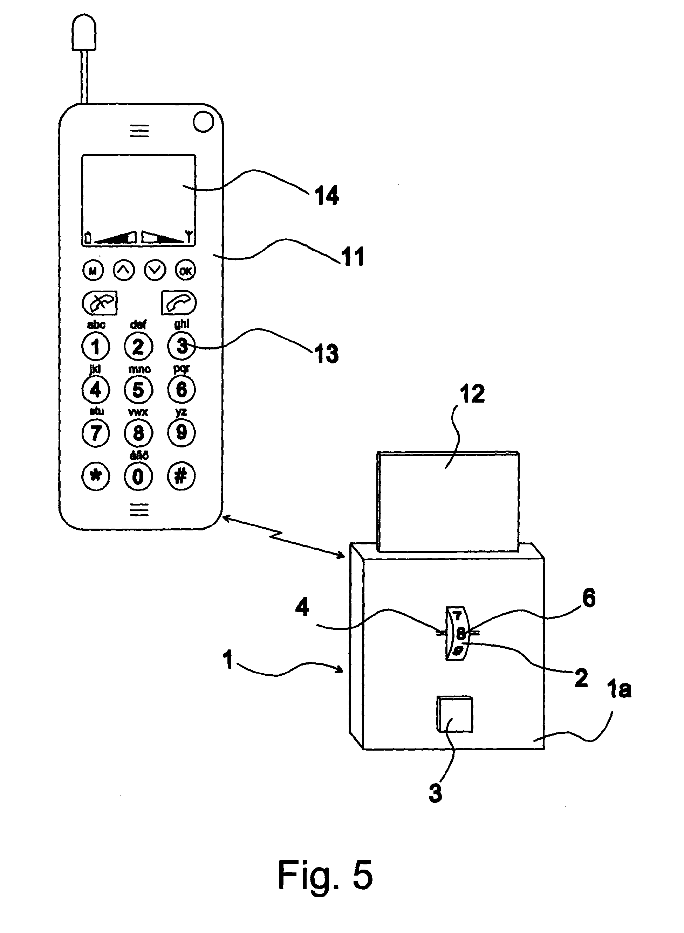

In the Bluetooth technology, the pairing, *i*.*e*. the setting up of a secure data transmission link, is successful in the following way, using as an example a wireless device 11 (Fig. 5) which can be a mobile phone, and a smart card reader which is the above-described electronic device 1. Naturally, it is obvious that pairing is not limited to these devices only. To start with, the user activates a pairing application in the wireless device, wherein this application remains waiting for the entering of PIN codes into the wireless device and the smart card reader. The user enters the PIN code *(e.g.* "4385") in the smart card reader by means of at least one selector 2 therein. After this, the user enters the same PIN code in the wireless device by means of a keypad 13 and a display 14 therein, after which the user starts the pairing process from the wireless device. Next, the wireless device and the smart card reader set up authentication keys on the basis of the PIN codes in a way known as such. If these authentication keys match, the pairing process can be continued. After this pairing process, a secure data transmission link has been set up between the smart card reader and the wireless device.

The present invention is not limited solely to the embodiments presented above, but it can be modified within the scope of the appended claims.

## Claims

1. An electronic device (1), which is a wireless auxiliary device to be used with another electronic device and provided with means for manual entering of a key code, **characterized in that** said means for entering of a code comprise at least one selector which is arranged to select said key code or an element of it, wherein a secure wireless data transmission link is arranged to be set up between said auxiliary device and another communication device, by means of the selected key code.

2. The electronic device according to claim 1, **characterized in that** the key code is a secret key code or a security code, such as a PIN code.

3. The electronic device according to claim 1, **characterized in that** the selector is rotatable, comprising a roll-like, wheel-like or disc-like part which is arranged to rotate around an axis of rotation which is substantially perpendicular or substantially parallel to the auxiliary device.

4. The electronic device according to claim 1, **characterized in that** the auxiliary device comprises one, and only one, selector which is arranged for entering a key code consisting of at least two elements, such as numbers.

5. The electronic device according to claim 1, **characterized in that** the key code consisting of at least two elements, such as numbers, is arranged to be entered by successive selection sequences, wherein each selection sequence corresponds to one said element.

6. The electronic device according to claim 1, **characterized in that** to accept the already selected key code or its selected element, said selector is arranged to be pressed or said auxiliary device is provided with a control button (3).

7. The electronic device according to claim 1, **characterized in that** the auxiliary device further comprises means to detect the selected key code and to store it in the memory (10) of the auxiliary device, the means comprising a position detector which is arranged to read the key code selected by the selector, and a processor controlling the operation, for processing and storing the key code in the memory.

8. The electronic device according to claim 1, **characterized in that** the auxiliary is a wireless portable hands-free set or a wireless smart card reader.

9. The electronic device according to claim 5, **characterized in that** said selection sequence is composed of at least one predefined position of the selector, or at least one predefined motion of the selector, or a combination of said position and said motion.

10. The electronic device according to claim 9, **characterized in that** data transmission between said auxiliary device and said another electronic device is arranged to be performed by using a wireless communication method, such as Bluetooth, WLAN or IrDA.

11. A method for entering a key code into an electronic device operating as an auxiliary device of another electronic device and provided with means for manual entering of the key code, **characterized in that** in the method said key code is selected by using at least one selector, which is arranged for the selection of said key code or its part, wherein a secure wireless data transmission link is set up between the auxiliary device and said another electronic device by means of the selected key code.

12. The method according to claim 11, **characterized in that** the key code is selected by rotating each rotatable selector in a predetermined position corresponding to the key code.

13. The method according to claim 11, **characterized in that** the key code is selected by rotating one, and only one, rotatable selector (2) in predetermined successive positions corresponding to the key code.

14. The method according to claim 13, **characterized in that** the selector is rotated a predetermined number of revolutions between the different positions.

15. The method according to claim 11, **characterized in that** the key code is selected by rotating one, and only one, rotatable selector into predetermined successive positions corresponding to the key code in such a way that the direction of rotation is always changed to the opposite between the different positions.

16. The method according to claim 11, **characterized in that** when the key code comprises a number, the key code is selected by rotating the rotatable selector a number of revolutions corresponding to said number in the same direction.

17. The method according to claim 11, **characterized in that** when the key code comprises at least two numbers, the key code is selected by rotating one, and only one, rotatable selector the number of revolutions corresponding to the number in the same direction, and by changing the direction of rotation to the opposite between successive numbers.

18. The method according to claim 11, **characterized in that** the already selected key code or its selected part is accepted by changing the direction of rotation of the rotated selector or by pressing said selector or by pressing a control button (3) provided in the auxiliary device.

19. A wireless device and an auxiliary device, which operates in a wireless manner and is provided with means for manual entering of a key code, **characterized in that** said means for entering a code comprise at least one selector arranged to select said key code or an element of it, wherein a secure wireless data transmission link is arranged to be set up between said auxiliary device and said wireless device, by using the selected key code.

20. The wireless device and the auxiliary device according to claim 19, **characterized in that** the auxiliary device is a wireless portable hands-free set or a wireless smart card reader.
